# EUROPEAN PATENT APPLICATION

(11) **EP 1 467 423 A2**
(43) Date of publication of application: **13.10.2004**
(21) Application number: 03104126.2
(22) Date of filing: 07.11.2003
(51) Int. Cl.: H01M 6/38

(54) **Reserve battery and its use**

(30) Priority: 29.11.2002 NL 1022034
(71) Applicant: THALES NEDERLAND B.V., 7550 GD Hengelo (NL)
(72) Inventor: Straver, Johannes, 94117 Arcueil Cedex (FR)
(74) Representative: Lucas, Laurent Jacques

(57) **Abstract**

This invention relates to high energy density batteries, of a reserve type, capable of long storage lifetime.

An object of this invention is to provide a reserve battery more appropriate to a projectile fuze application. In such application, the battery must be activated only when the fuze is fired. Reserve batteries, as lithium one for example, are convenient but the firing of the fuze does not ignite the activating system. So, battery false ignition could happen.

This invention solves the above-mentioned drawback by using the fuze firing to trigger off the battery ignition. For this purpose, this invention proposes a reserve battery comprising a cell-stack of electrodes with an annular shape, a liquid reserve ampoule containing the electrolyte at the centre of said cell-stack, an activating system which breaks the said ampoule at a predetermined acceleration level, and housing in which this said cell-stack, this said ampoule and this said activating system are placed.

## Description

This invention relates to high energy density batteries, of a reserve type, designed for long storage lifetime and fast activation.

In some applications, batteries are required which may be retained in inventory and storage for a long time before being called upon for use. Moreover, such batteries shall be kept in inactive condition during storage, but be subject to simple and rapid activation when they are placed into service. Furthermore, such batteries could have to be effective in operation in environments that may be subjected to very low sub-zero temperatures or very high terrestrial temperatures..

Developments in high energy density battery systems provide greater energy density than do conventional batteries. Therefore, such high-energy battery systems are adapted to many applications where the batteries are to be stored for long periods of non-use and to be available, immediately, for use in emergency situations.

For this object, reserve type batteries have been provided utilising such high density battery cells, so they will be available for applications where the battery may be kept in storage and held in reserve for relatively long periods of time before being called into service.

In certain such applications, the battery should be able to be stored for a long period, up to 15 years, before the battery is called into service, and be able to be activated for immediate service when desired. For such purpose, reserve battery principles have been adapted to the high energy density systems like those based on lithium for example.

The low temperature performance of the batteries of these systems is substantially better than those of conventional batteries. The primary high energy density batteries show good capacity retention for storage at room temperatures for only 1 to 2 years.

The degradation of the cell performance on storage is predominantly associated with the reactive lithium anode. The storage deficiencies of the high energy density systems are therefore obviated by the use of reserve type structures in which the electrolyte is kept isolated from the lithium anode, in a separate reservoir, during storage. In such an arrangement, a storage life of fifteen years is obtained without problems.

An example of such lithium reserve batteries contains a lithium anode, a carbon cathode and an organic electrolyte consisting of a mixture with liquid sulphur oxide.

The cell construction is made, for example, in a "D" cell size. The electrodes of the cell are constructed by winding rectangular strips, of anode-separator-cathode-separator stacks, into a cylindrical spiral roll which is then placed in a nickel plated steel can. The anode terminal tab is electrically connected to the cell top, which is electrically insulated from the cell. The cell is sealed after the dry assembly. The electrolyte fills the cell through the seal by means of a needle.

In such batteries, a simple activating system is provided to simultaneously activate all the cells by opening the reservoir in each of the respective cells, to release the electrolyte and render each associated cell active.

An object of this invention is to provide a reserve battery more appropriate to a projectile fuze application. In such application, the battery must be activated only when the fuze is fired. Reserve batteries, as lithium one for example, are convenient because of their long storage lifetime, their high energy density, their capabilities to operate at very low sub-zero, and high terrestrial temperatures and their rapid activation. But the firing of the fuze does not ignite the activating system in such reserve battery. So, battery false ignition could happen.

This invention solves the above-mentioned drawback by using the fuze firing to trigger off the battery ignition. For this purpose, this invention proposes a reserve battery comprising a cell-stack of electrodes with an annular shape, a liquid reserve ampoule containing the electrolyte at the centre of said cell-stack, an activating system which breaks the said ampoule at a predetermined acceleration level, and housing in which this said cell-stack, this said ampoule and this said activating system are placed.

Moreover this invention keeps, or better improves the reserve battery capacities as the battery storage lifetime and the battery activation.

Firstly, the cell-stack could comprise a mixed powder layer comprising carbon and Teflon put over a plate with a grid as cathode, a glass fiber layer as separator and a lithium layer as anode.

Secondly, the electrolyte could comprise thionylchloryde and bromium.

Further features and advantages of the invention will be apparent from the following description of examples of embodiments of the invention with reference to the drawing, which shows details essential of the invention, and from the claims. The individual details may be realised in an embodiment of the invention either severally or jointly in any combination.
- Figures 1a and 1b, battery as in the first embodiment, respectively a cutaway view of this battery and a upper view of the protection system,
- Figure 2, cutaway view of a battery as in the second embodiment,
- Figure 3, cutaway view of the battery's stack,
- Figure 4, battery voltage rise times curves.

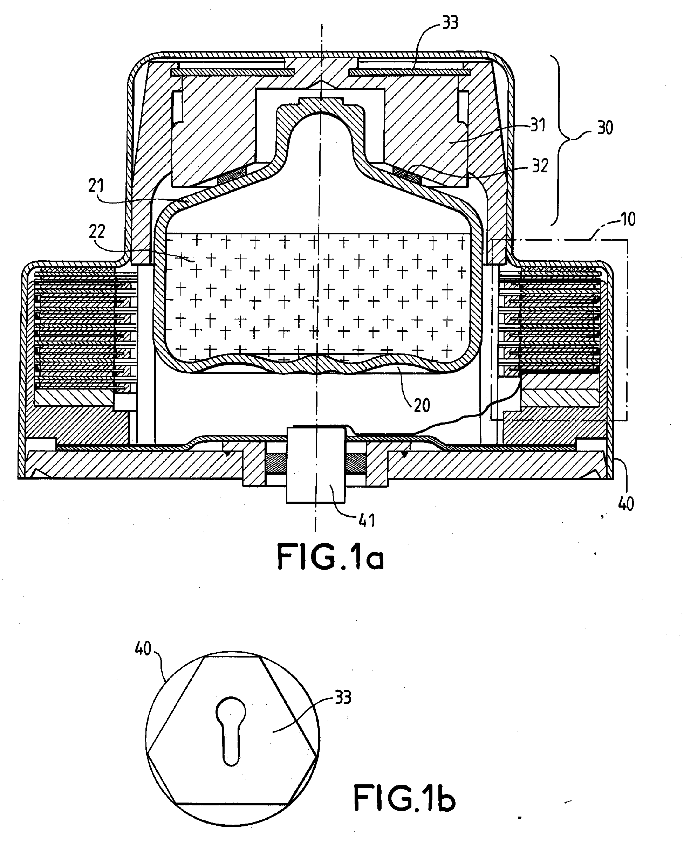

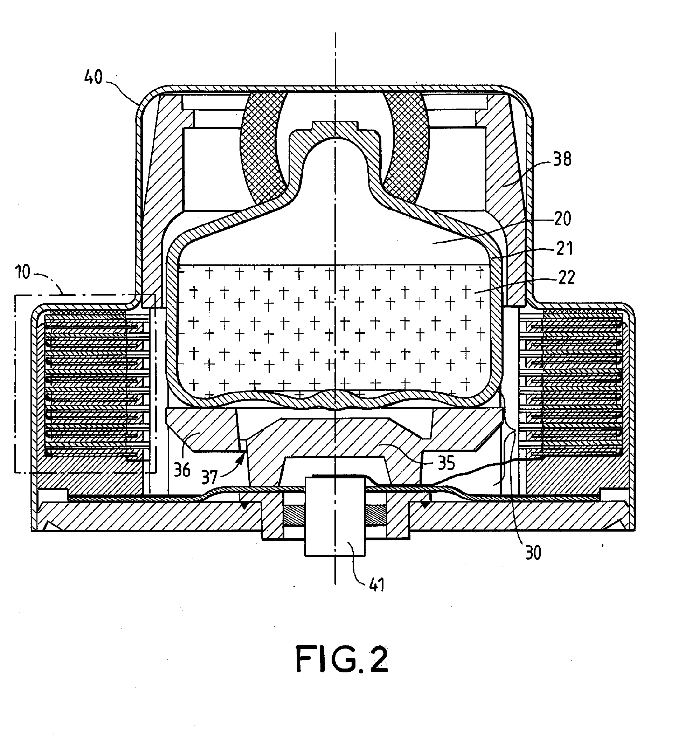

Figures 1 and 2 propose two embodiments of this invention. These reserve batteries comprise housing 40 with an electrical connection 41. The housing 40 could be made of stainless steel. The shown housings are hermetic.

For applications like projectile fuze, the battery needs a long storage lifetime provided by the use of electrolyte reserve. So, those reserve batteries comprise a liquid reserve 20 inside the housing 40. This liquid reserve 20 comprises an ampoule 21 containing the electrolyte 22. This electrolyte 22 is a liquid which could result from the mixing of plural elements. For example the electrolyte 22 could be made of thionylchloryde SOCL2 and bromium.

The proportion of bromium use for the electrolyte 22 realisation can be even greater than the proportion than can be disolued in the electrolyte liquid 22. Such high proportion of bromium has a surprising effect on the battery active lifetime. Indeed, greater the proportion of bromium is, more the battery active lifetime extends.

The reserve battery according to this invention comprises a cell-stack 10 of electrodes. The housing 40 may have a cylindrical shape. The bottom part of the housing 40 is wider than the top part. So, the housing widest bottom part can contain the cell-stack 10. A cell-stack 10 with an annular shape is well adapted to be contained in the housing bottom part and to surround the liquid reserve 20 at least in its bottom part. So, when the activating system 30 breaks the ampoule 22, the electrolyte liquid 21 is released and fills the cell-stack 10 volume. This causes a rapid activation of the battery. The activating system 30 uses the acceleration, for example due to the projectile fuze firing, to trigger off the battery activation by breaking the ampoule 22.

Up to nine cells can be incorporated in this particular cell-stack 10, but the number is depending on the specified requirements.

Such batteries could be used either for terrestrial or naval projectile fuze application. The activating system 30, which breaks the ampoule 20, must trigger off only by the firing acceleration. Therefore the activating system 30 could comprise means for vibrations and shocks protection.

Such vibrations and shocks protection means give the battery field proof capacity. For example, the fuze loading or dropping should not cause the fuze battery activation. So, the ampoule 21 and the activating systems 30 are made in such way that the ampoule is broken only at a predetermined acceleration level, which is, for example, the fuze firing acceleration in projectile fuze battery applications.

For terrestrial use, the battery should have vibration protection means. The ampoule 21 should resist the vibrations and shocks due to terrestrial transport over any kind of terrain.

Figure 1a shows a first embodiment of the reserve battery according to the invention. The battery of this first embodiment is particularly adapted for terrestrial projectile fuze applications.

The battery liquid reserve 20 comprises an ampoule 21 with a shape adapted to hang the battery ampoule 21. The ampoule 21 could have the shape of a closed bell. For example the ampoule 21 could have a hanging part and be divided in two. At he ampoule highest point, the ampoule diameter is at least a little bit bigger than the ampoule point just below.

The battery activating system 30 comprises a hanging device 33. The hanging adapted part of the ampoule 21 is hung to this hanging device 33 placed at the inside top of the battery housing 40. So, the ampoule 21 is maintained at a predetermined distance of the housing bottom.

This predetermined distance is computed taking into account that the ampoule 21 should break when released from the hanging device 33 at the said predetermined acceleration level. For example, in projectile fuze applications, this said predetermined acceleration is the fuze firing acceleration.

Another embodiment could be that it is not the ampoule 21 which is released from the hanging device 33 but the hanging device 33 itself which is released from the top of the battery housing. So, at the said predetermined acceleration level, the hanging device 33 falls down with the ampoule 21 still hanging to this hanging device 33 on to the bottom of the housing 40.

To help the ampoule breaking, the activation system 30 could comprise a weight 31. This weight 31 may be put on the ampoule as shown by Figure 1a. In order that the ampoule 21 and the weight 31 are a unitary assembly, the weight 31 is glued over the ampoule 21 in their contact point 32.

This assembly (21, 31) could have a hanging part on its top. This hanging part is divided in two. At the highest point, the diameter is at least a little bit bigger than the point just below. A first way to realise this assembly hanging part is that the ampoule 21 has already is own hanging part and the weight 31 has a hole in its centre to let the ampoule hanging part go through and become the assembly hanging part. A second way is that the ampoule 21 is completely covered by the weight 31 on its top part. The assembly hanging part is made directly on the top of the weight 31.

In the case of a ampoule 21 and weight 31 assembly, the weight 31 and the predetermined distance are given by the predetermined acceleration. So, when the ampoule 21 and weight 31 assembly is released, it falls down with such velocity that the ampoule 21 breaks over the battery-housing bottom.

In order to be field proof, the hanging device 33 could be a field proven suspension. For this purpose, the hanging device is made of a flexible material. The material should be flexible enough to absorb the vibrations and shocks but rigid enough to maintain the ampoule 21 away from the housing bottom until the ampoule release.

The activating system 30 shown by Figure 1a either release the ampoule 21 or the ampoule 21 and weight 31 assembly from its hanging device 33, or the hanging device 33 from the housing top. This release is triggered off only in response to a predetermined acceleration. In projectile fuze applications, this said predetermined acceleration corresponds to specified setback forces imposed during firing.

Such firing acceleration is sufficient to release the ampoule 21 and weight 31 assembly. So, the inertial forces of this assembly combined with the setback forces imposed by the firing push the ampoule 21 on to the housing bottom. These forces are sufficient to break the ampoule 21 to release the electrolyte liquid 22.

The liquid 22 fills the housing bottom part covering the cell-stack 10 contained in this housing bottom part. The release of the electrolyte liquid 22 over the cell-stack 10 activates the battery.

Figure 1b shows an example of hanging device 33. It has a hexagonal shape. The housing 40 in its top part retains some edges, three in this example, of the hanging device 33.

To be retained, these edges could be forced against the housing 40. For this purpose, the hanging device 33 could be realised in a manner that it is large enough for pushing its edges against the housing 40. If the activating system 30 consists in the release of the hanging device 33 from the housing top, the hanging device is realised to be sufficiently small to let the hanging device 33 being released from the housing top at a predetermined acceleration.

Another way to retain these said hanging device edges at the housing top is to realise a groove on the internal face of the housing 40 in its top part. The hanging device 33 is put in this groove. The groove is deep enough to retain the hanging device 33, even during vibrations and shocks. If the activating system 30 consists in the release of the hanging device 33 from the housing top, the groove should be thin enough to let the hanging device 33 fall down with the ampoule 21 at the said predetermined acceleration.

The ampoule 21 is hung to this hanging device 33 by its highest part. The hanging device 33 comprises two-communicating holes in its centre. The first hole has a diameter large enough to engage the top part of the ampoule 21 and weight 31 assembly. By moving this assembly (21, 31) from this first hole to the second hole, this assembly (21, 31) is hung to the hanging device 33. This second hole is enough big to engage the narrowest point of this assembly (21, 31) and has a smaller diameter than the highest point of this assembly (21, 31).

By this way, this ampoule 21 - weight 31 assembly is retained in the housing top part by the hanging device 33. In the applications where a weight 31 is not needed, the hanging methods can be applied directly to the ampoule 21 instead of the assembly (21, 31).

Such activating system 30 with its vibrations and shocks protection means could resist up to 1 600 g in acceleration. Such vibrations and stocks resistance ranges of the reserve battery according to this invention are approximate.

Figure 2 shows a second embodiment of the reserve battery according to the invention. The battery of this second embodiment is particularly adapted for naval projectile fuze applications.

The battery reserve 20 comprises an ampoule 21 placed on the activating system 30. The activating system 30 comprises a support 35 with edges 36. The edges 36 are linked to the support 35 by breaking means 37. These breaking means 37 are enough resistant to break only at a predetermined acceleration.

The support 35 and edges 36 could be made of a specific material. This material absorbs vibrations and shocks. To prevent the battery reserve (ampoule) from moving inside the housing 40, the activating system 30 could comprise blocking means 38. These blocking means 38 prevent lateral moving and blocks the ampoule 21 over its support 35.

So, when the reserve battery is submitted to a predetermined acceleration, the ampoule 21 pushes on the support 35 and the edges 36. The support 35 is realised to resist such pushing forces. For example, as shown on figure 2, the support 35 has at least one link point with the housing bottom. But the edges 36 are only linked to this support 35. This link is made by the breaking means 37. So, the pushing forces of the ampoule on the edges 36 are sufficient for the breaking means 37 to break, as the ampoule 21 has a diameter bigger than the support diameter, the ampoule 21 breaks on this support 35.

This releases the electrolyte liquid 22 from the ampoule 21. The electrolyte liquid 22 fills all the housing bottom part containing the cell-stack 10. Thus, the battery is activated.

The support 35 of the activating system 30 may be a plastic anvil. In reserve battery with such activating system 30, the ampoule 21 is supported in order to withstand forces, for example the forces of loading and flick ramming which occur with most naval guns. The breaking means 37 could resist up to 5 000 g in acceleration.

The cell-stack 10 of any reserve battery embodiment could be adapted to be appropriate to the lithium thionylchloryde electrochemistry.

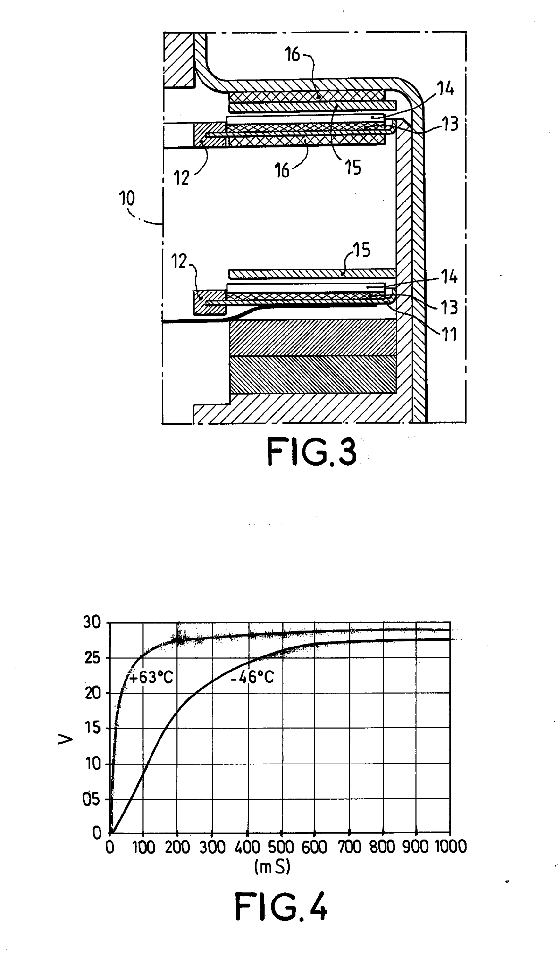

Figure 3 shows an example of cell-stack 10 of electrodes according to the invention. The cell-stack 10 comprises several layers - each layer has an annular shape. This form is adapted to fit the housing bottom and to surround the ampoule 21.

The first layer comprises an annular plate 11. The plate 11 could be made of nickel. The annular plate comprises a plastic ring 12 in its centre. This plastic ring 12 maintains the ampoule 21 surrounded by the cell-stack 10.

Moreover, the fist layer comprises powder 13. This annular plate 11 comprises also a grid to keep powder over this plate 11. The powder 13 of this first layer is the battery cathode. The powder 13 could be made by mixing carbon powder with Teflon powder. Another alternative to Teflon could be Tefzel. With Tefzel, the battery performances are better than with Teflon.

The second layer is a separator 14. This separator 14 isolates the cathode formed by the first layer, particularly by the powder 13, from the anode. The separator 14 could be made of glass fiber foil.

The third layer 15 is the battery anode. It could comprise lithium. Another fourth separator layer 16 is placed between the third layer of the first cell and the first layer of a second cell. These layer steps could be repeated, as many times it is necessary to construct up to nine cells depending of the specified requirements.

Such battery cell-stack 10 gives the battery a good rise time (around 10 ms) which means that the battery gets quickly a good voltage.

Figure 4 shows, as an example, voltage rise time curves for a battery load of 330 Ω. These curves are only approximate values obtained with reserve batteries according to the invention. They show that such reserve batteries are operational for temperature range from -46°C to +63°C.

The first curve, which is represented with a straight line, gives the voltage according to the time after activation for a temperature of -46°C. The battery discharge voltage after 200 ms is higher than 22 V. The second curve, which is represented with a dotted line, gives the voltage according to the time after activation for a temperature of +63°C. The battery voltage rises quicker for this temperature than for lower temperature. After 200 ms, the battery discharge voltage is higher than 26 V for the eight cells version.

The noise voltage for reserve battery according to the invention is lower than 50 mV for 50-5 000 Hz. Such reserve batteries have a long storage lifetime, even more than 15 years as they are totally inert during transport, handling or storage at room temperature (at least from -54° to +71°C) without impairing its specified performance.

For their uses in artillery fuzes, these reserve batteries should have small size. These battery structures and chemistry components permit to obtain good battery in terms of storage lifetime and activation speed. Even, such batteries could be obtained for use in projectile fuze calibre from 57 to 203 mm, for example.

## Claims

1. Reserve battery comprising:
- a cell stack (10) of electrodes,
- a liquid reserve ampoule (21) containing the electrolyte (22),
- an activating system (30),
- a housing (40) in which the said cell-stack (10), ampoule (21) and activating system (30) are placed,
**characterised in that**
- the cell-stack (10) of electrodes has an annular shape,
- the ampoule (21) is placed at the centre of this said annular cell-stack (10),
- the activating system (30) breaks the ampoule (21) at a predetermined acceleration.

2. Reserve battery according to the preceding claim **characterised in that** the activating system (30) comprises means to protect the ampoule (21) from vibrations and shocks.

3. Reserve battery according to anyone of the preceding claims **characterised in that** the activating system (30) comprises a weight (31) glued on the top of the ampoule (21) and/or a hanging device (33) to which the ampoule (21) is hung with means to release the ampoule (21) at the said predetermined acceleration.

4. Reserve battery according to the preceding claim **characterised in that** the hanging device (33) comprises a vibration and shocks protection means.

5. Reserve battery according to anyone of claims 2 to 4 **characterised in that** the hanging device (33) is a plate with a predetermined form, some edges of this form retaining the hanging device (33) in the top of battery housing.

6. Reserve battery according to the preceding claim **characterised in that** the hanging device (33) is enough big for pushing the edges against the housing and enough small for releasing the hanging device from the housing at the said predetermined acceleration.

7. Reserve battery according to anyone of claims 1 or 2 **characterised in that** the activating system (30) comprises a support (35) over which the ampoule (21) is stood up, edges (36) linked only to the support (35) by breaking means (37).

8. Reserve battery according to the preceding claim **characterised in that** the vibration and shocks protection means is made of a flexible material.

9. Reserve battery according to anyone of the preceding claims **characterised in that** the electrolyte liquid (22) contained by the ampoule (21) comprises thionylchloryde and bromium.

10. Reserve battery according to anyone of the preceding claims **characterised in that** the cell-stack (10) comprises an annular grid on a plate (11) over which a mixed powder (13) comprising carbon an Teflon is put, a glass fiber foil layer (14) and a layer comprising lithium (15).

11. Reserve battery according to anyone of the preceding claims **characterised in that** the said predetermined acceleration is greater equal to the acceleration of a projectile fuze during transport or loading.

12. Use of a reserve battery according to anyone of the preceding claims in a projectile fuze.
